# EUROPEAN PATENT SPECIFICATION

(11) **EP 2 584 866 B1**
(45) Date of publication and mention of the grant of the patent: **22.07.2015**
(21) Application number: 11185930.2
(22) Date of filing: 20.10.2011
(51) Int. Cl.: H05B 33/08, H05B 39/04

(54) **A dimmable energy-efficient electronic lamp**
Dimmbare energieeffiziente elektronischen Lampe
Lampe électronique éco-énergétique à intensité réglable

(43) Date of publication of application: 24.04.2013
(73) Proprietor: Rohm Co., Ltd., Kyoto-shi, Kyoto 615-8585 (JP)
(72) Inventor: Lookman, Paul Andreas Robert, 47877 Willich (DE); Fronen, Robert Jan, 5391 AL, Nuland (NL); Jiang, Zhenhua, 40239 Duesseldorf (DE); de Vries, Fenno Cornelis Jan, 47877 Willich (DE)
(74) Representative: Isarpatent

(56) References cited:
- WO-A1-2011/061633
- WO-A2-2011/013060
- US-A1- 2011 115 400
- US-A1- 2011 121 754
- US-A1- 2011 234 123

## Description

The invention relates to a dimmable energy-efficient electronic lamp connectable to a mains power supply and to a method for saving power consumed by a dimmable energy-efficient electronic lamp.

### TECHNICAL BACKGROUND

WO 2011/013060 A2 discloses a bleeder circuit for combining a phase-cutting dimmer and a light emitting diode. The bleeder circuit comprises a current limiting circuit for limiting a current flowing through the bleeder circuit and a voltage detecting circuit for activating or deactivating the current limiting circuit in response to the detection result. Alternatively, the current limiting circuit may be controlled by a microprocessor circuit.

There is a general trend to replace incandescent light bulbs with more efficient light sources. For example, a light emitting diode has an approximate ten times higher efficiency than a conventional incandescent light bulb. When replacing a conventional incandescent light bulb by a dimmable energy-efficient electronic lamp this dimmable energy-efficient electronic lamp has also to deal with existing household wall dimmers which are used to dim the conventional incandescent light bulbs. The load of a typical energy-efficient electronic lamp using for instance light emitting diodes comprises a load which is too low to be used directly with a phase-cut wall dimmer. The low load of the conventional energy-efficient electronic lamp causes such a conventional dimmer to trigger at irregular intervals so that high frequency disturbances on the mains power supply can be created and resulting in so called lamp flickering. To overcome this problem, dimmable energy-efficient electronic lamps have been proposed comprising an adapted dynamic load to provide for a stable dimmer operation and hence no lamp flickering and in particular to avoid high frequency disturbances of the mains power supply. This adapted dynamic load provides the needed load for each phase of the phase-cut dimming. By providing this active load the dissipation of such a dimmable energy-efficient electronic lamp is increased. Consequently, due to the adapted load control a dimmable energy-efficient electronic lamp such as a dimmable LED lamp has a lower efficiency than a non-dimmable energy-efficient electronic lamp when used without a wall dimmer.

Accordingly, it is an object of the present invention to provide a dimmable energy-efficient electronic lamp having an improved efficiency and to provide a method for saving power consumed by a dimmable energy-efficient electronic lamp.

This object is achieved by a dimmable energy-efficient electronic lamp connectable to a mains power supply comprising the features of claim 1 and by a method for saving power consumed by an energy-efficient electronic lamp having the features of claim 12.

In a possible embodiment of the dimmable energy-efficient electronic lamp according to the present invention the dynamic load control circuit further comprises a dimmer detection circuit having a comparator adapted to compare the dim-level indication signal with a predetermined reference level to generate a dimmer present signal supplied to a controller of said dynamic load circuit.

In a possible embodiment of the dimmable energy-efficient electronic lamp if the dim-level indication signal has a high amplitude being higher than a reference level indicating that no phase-cut dimmer is present in the mains power supply, the comparator of the dimmer detection circuit sets the dimmer present indication signal to low and
if the dim-level indication signal indication signal has a low amplitude being lower than the reference level indicating that a phase-cut dimmer is present in the mains power supply, the comparator of the dimmer detection circuit sets the dimmer present indication signal to high.

In a possible embodiment of the dimmable energy-efficient electronic lamp the dynamic load circuit comprises at least one transistor having a gate receiving a switching control signal from the controller of said dynamic load control circuit depending on the dimmer present indication signal received by the controller from the dimmer detection circuit, depending on the dimmer on/off signal received by the controller from the phase-cut detector and depending on a current sense input signal indicating a level of a driver current.

In a possible embodiment of the dimmable energy-efficient electronic lamp a first transistor of the dynamic load circuit is connected between the output of the rectifier circuit and a reference potential via a first resistive load which consumes electrical power if the first transistor is switched on in response to a switching control signal output by the controller of said dynamic load control circuit.

In a further possible embodiment of the dimmable energy-efficient electronic lamp a second transistor of the dynamic load circuit is connected between the output of the first transistor and the reference potential via a second resistive load which consumes electrical power if the first and second transistor of the dynamic load circuit are switched on in response to switching control signals output by the controller of said dynamic load control circuit.

In a possible embodiment of the dimmable energy-efficient electronic lamp if the dimmer on/off signal received by the controller of the dynamic load control circuit from said phase-cut detector indicates that a dimmer is off the controller applies switching control signals to switch both transistors of said dynamic load circuit on.

In a possible embodiment of the dimmable energy-efficient electronic lamp if the dimmer on/off signal received by the controller of said dynamic load control circuit from said phase-cut detector indicates that a dimmer is on the controller applies switching control signals to switch the second transistor of said dynamic load circuit off and to switch the first transistor of said dynamic load circuit on.

In a further possible embodiment of the dimmable energy-efficient electronic lamp if the dimmer on/off signal received by the controller of the dynamic load control circuit from said phase-cut detector indicates that a dimmer is on and if the current sense input signal indicates that the driver current is larger than a minimal needed current for stable operation the controller applies switching control signals to switch both transistors of said dynamic load circuit off.

In a possible embodiment of the dimmable energy-efficient electronic lamp according to the present invention if the dimmer on/off signal received by the controller of the dynamic load control circuit received from the phase-cut detector indicates that a dimmer is on and if the dimmer present indication signal received by the controller from the dimmer detection circuit indicates that no dimmer is present the controller applies switching control signals to switch both transistors of the dynamic load circuit off.

In a further possible embodiment of the dimmable energy-efficient electronic lamp according to the present invention the dimmer level indication signal output by the low pass filter of the phase-cut detector is applied to a signal reshaper of a driver circuit to generate a reference voltage for a DC/DC converter of the driver circuit adapted to stabilize an electrical current flowing through at least one light-emitting entity comprising at least one light emitting diode (LED) or at least one OLED or at least one CFL or at least one laser. In a possible embodiment of the method according to the present invention the dimmer on/off signal and the dim-level indication signal are evaluated by a controller of a dynamic load control circuit to adapt a load of the dynamic load circuit.

### BRIEF DESCRIPTION OF THE FIGURES

In the following possible embodiments a dimmable energy-efficient electronic lamp and a method for saving power consumed by a dimmable energy-efficient electronic lamp are explained in more detail with reference to the enclosed figures.
- Fig. 1: shows a block diagram of a possible embodiment of a dimmable energy-efficient electronic lamp according to the present invention;
- Fig. 2: shows a possible implementation of a phase-cut dimmer used for dimming a dimmable energy-efficient electronic lamp according to the present invention;
- Fig. 3: shows electrical signals for illustrating the operation of a phase-cut dimmer as shown in fig. 2;
- Fig. 4A, 4B: show signal diagrams showing an input and output signal of a phase-cut dimmer as illustrated in connection with figs. 2, 3;
- Fig. 5A, 5B: illustrate the input and output signal of a rectifier circuit as employed by a dimmable energy-efficient electronic lamp according to the present invention;
- Fig. 6: shows a circuit diagram of a possible implementation of a phase-cut detector as employed by a dimmable energy-efficient electronic lamp according to the present invention;
- Fig. 7: shows a circuit diagram of a possible implementation of a dynamic load control circuit as employed by dimmable energy-efficient electronic lamp according to the present invention;
- Fig. 8: shows a circuit diagram of a possible implementation of a dimmer detection circuit as employed by a dimmable energy-efficient electronic lamp according to the present invention;
- Fig. 9: shows a circuit diagram of a possible implementation of a driver circuit as employed by a dimmable energy-efficient electronic lamp according to the present invention;
- Fig. 10: shows a flow chart of a possible embodiment of a method for saving power consumed by a dimmable energy-efficient electronic lamp according to the present invention.

### DETAILED DESCRIPTION OF EMBODIMENTS

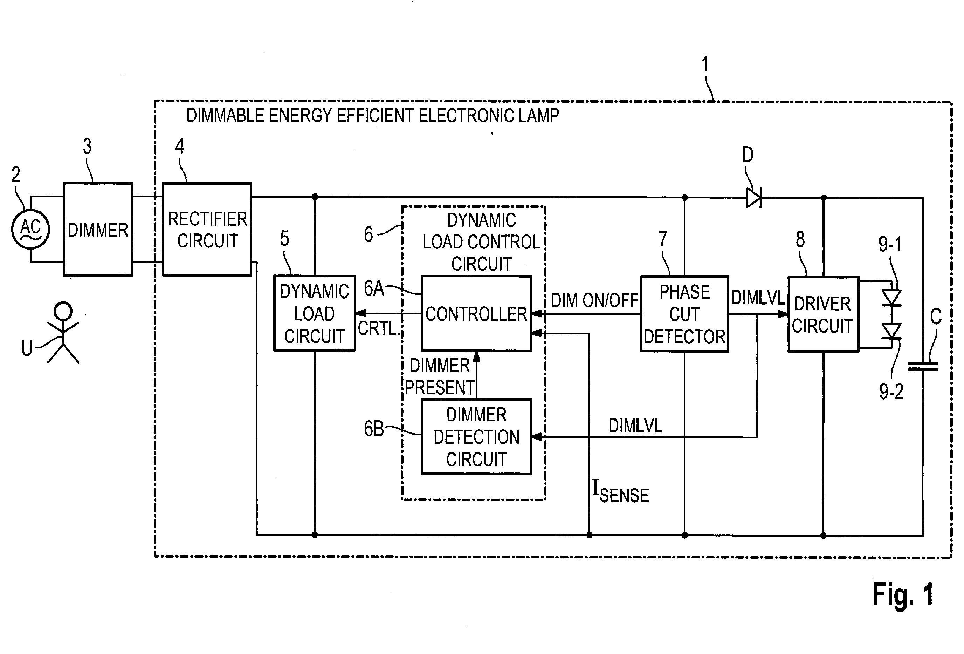

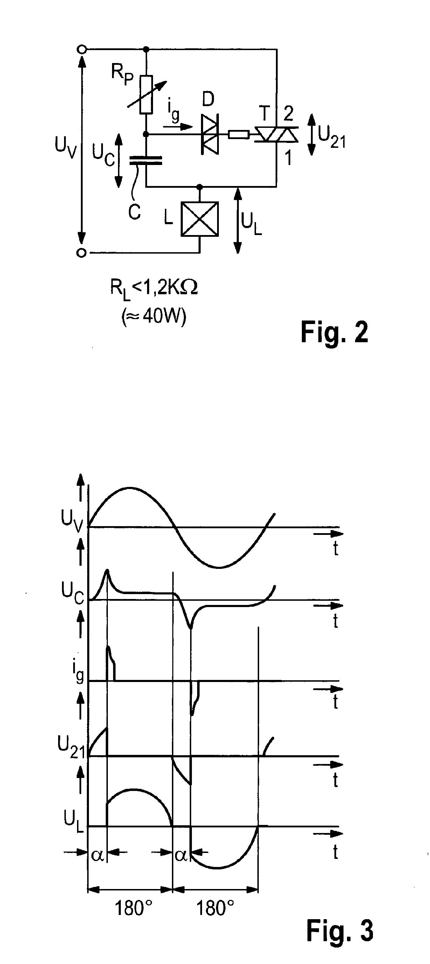

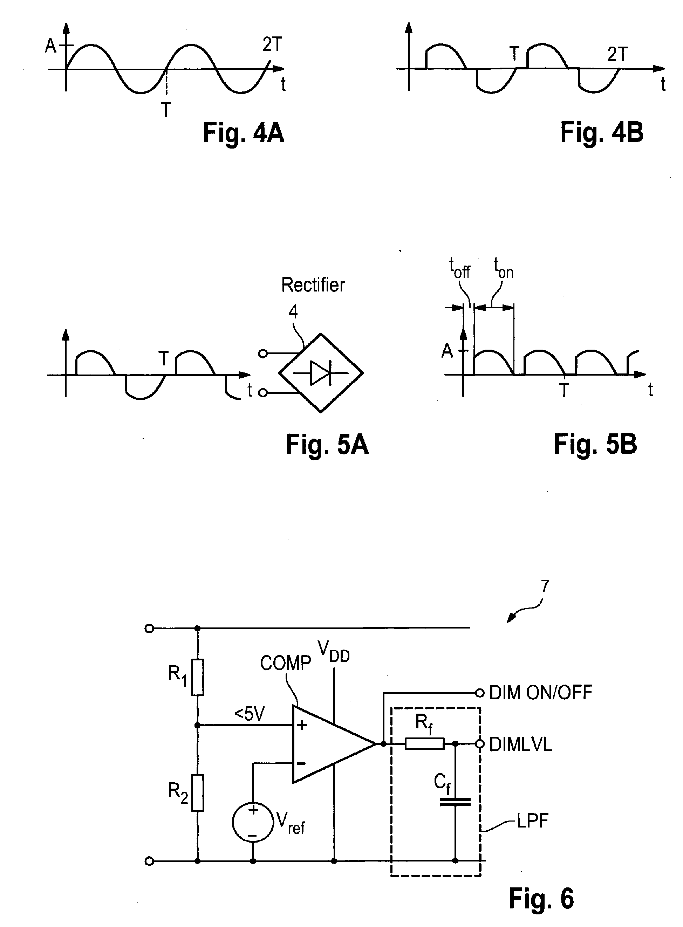

As can be seen in fig. 1 a dimmable energy-efficient electronic lamp 1 according to the present invention is connectable to a mains power supply 2 via a dimmer circuit 3. The dimmer circuit 3 is formed by a phase-cut dimmer. The dimmable energy-efficient electronic lamp 1 comprises a rectifier circuit 4 adapted to rectify a mains power supply signal applied to the dimmable energy-efficient electronic lamp 1 by the mains power supply 2. The rectifier circuit 4 can in a possible implementation be formed by a bridge rectifier circuit. The rectifier circuit 4 transfers an input (AC) signal to a single ended signal as illustrated in figs. 5A, 5B. The input signal of the rectifier circuit 4 as shown in fig. 5A is formed by the output signal of the phase-cut dimmer 3 as shown in fig. 4B. The phase-cut dimmer circuit 3 can be implemented for example by a TRIAC dimmer as shown in fig. 2.

If the dimmer circuit 3 as shown in fig. 2 is connected in series with a conventional incandescent lamp the incandescent lamp has a much lower resistance than the resistance of the potentiometer Rp of the dimmer circuit 3. When the TRIAC dimmer 3 as shown in fig. 2 is non-conductive a voltage across the RC network is equal to the voltage U_{V} (of the input dimmer signal, being e.g. a 240 V AC signal with a frequency of 50 Hz. After the DIAC D triggers the TRIAC T to start conducting the TRIAC T shorts the RC network and the applied voltage falls across the conventional incandescent lamp. Shorting the RC network prevents charging the capacitor C and stops the generation of trigger pulses. The TRIAC T stops conducting when the electrical current through the TRIAC T and the lamp drops below a predetermined hold current level I_{HOLD} of the TRIAC T. When the applied AC mains voltage approaches zero (ϕ=ηπ) the TRIAC conduction automatically stops. After the AC mains zero-crossing the internal dimmer capacitor C is charged until the DIAC trigger voltage is reached at which point the DIAC current triggers the TRIAC T to start conducting again. The TRIAC dimmer operation is shown in more detail by the signal diagrams of fig. 3.

Fig. 4B shows an output signal TRIAC dimmer signal output by the dimmer circuit 3 shown in fig. 2 in response to the input dimmer signal shown in fig. 4A with a phase-cut to limit the light intensity of a lamp connected to the respective dimmer circuit 3.

The output signal of the dimmer 3 as shown in fig. 4B is applied to the rectifier circuit 4 which transforms the phase-cut signal of the dimmer 3 to a single ended signal as shown by figs. 5A, 5B. The rectified signal as shown in fig. 5B is a pulse signal with a double frequency of the input signal, e.g. 100 Hz and with an amplitude A of maximal 240 V x 1,414 = 340 V.

As can be seen in fig. 1 the dynamic load circuit 5 is connected to the output of the rectifier circuit 4. The dynamic load circuit 5 is provided to stabilize the phase-cut dimmer 3. The dynamic load circuit 5 is controlled by a dynamic load control circuit 6 as shown in fig. 1. Further, a phase-cut detector 7 is connected to the output of the rectifier circuit 4 as also shown in fig. 1. The dynamic load control circuit 6 controls the dynamic load circuit 5 to provide a sufficient load for the dimmer circuit 3 so that the dimmer circuit 3 can work correctly with the lowest electrical power lost. By adjusting the dimmer circuit 3 a user U can set the on/off time of the dimmer 3. The phase-cut detector 7 uses the on/off time of the dimmer 3, i.e. the phase-cut to generate a dim-level indication signal DIMLVL which indicates the dimmer setting of the dimmer 3. A conventional dimmer 3 comprises an on-time t_{ON} varying approximately from 25% to 75% of the period time.

As can be seen in fig. 1 the dynamic load control circuit 6 comprises a controller 6A and a dimmer detection circuit 6B. The dimmer detection circuit 6B receives the dim-level indication signal DIMLVL from the output of the phase-cut detector 7.

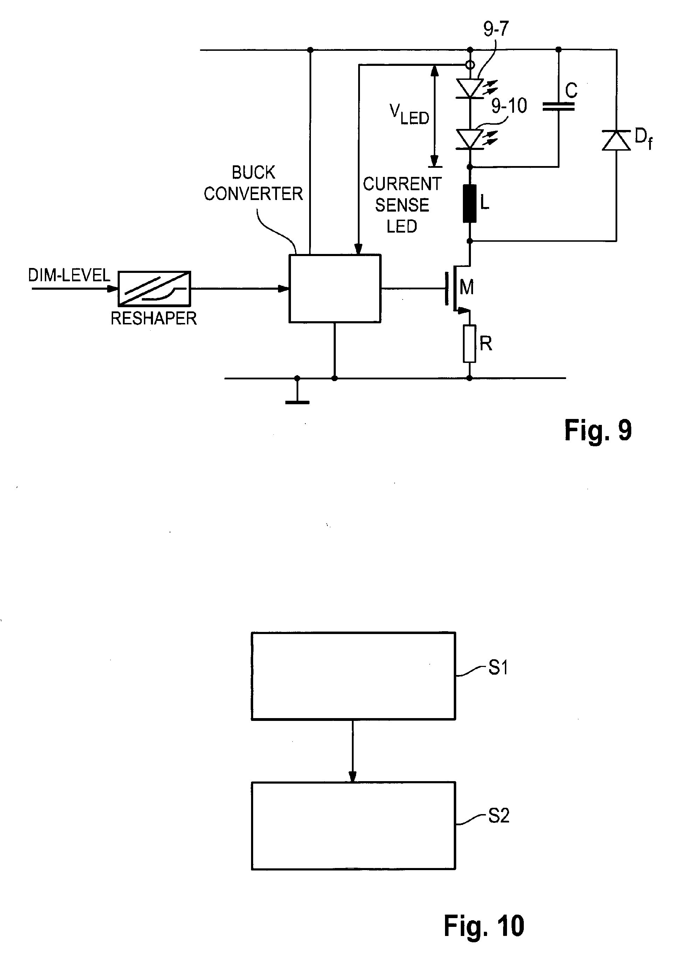

A possible embodiment of the phase-cut detector 7 is shown in the circuit diagram of fig. 6. As can be seen in fig. 6 the phase-cut detector 7 of the dimmable energy-efficient electronic lamp 1 comprises a voltage divider circuit adapted to divide the rectified mains power supply signal provided by the rectifier circuit 4 with a predetermined division ratio. The voltage divider circuit comprises in the implementation of fig. 6 two resistors R1, R2 to reduce the amplitude A, of e.g. 340 V to a voltage lower than the maximal input voltage of an integrated circuit IC of e.g. less than 5 V. The shape of the rectified mains power supply signal is compared by a comparator COMP of the phase-cut detector 7 to a low reference voltage V_{REF} to generate a square wave signal with a high amplitude of e.g. VDDA = 4 V. The output signal of the comparator COMP comprises a voltage of VDDA when the dimmer circuit 3 conducts (t_{ON}) and comprises a voltage of 0 V when the dimmer circuit 3 is not conducting. The output signal of the comparator COMP forms a dimmer on/off signal in the form of a pulse width modulated (PWM) signal being supplied to the controller 6A of the dynamic load control circuit 6 as shown in fig. 1. The on/off signal comprises a duty cycle which depends on whether a phase-cut dimmer 3 is present in the mains power supply or not. The information when the dimmer circuit 3 is conducting is used to control the dynamic load circuit 5. As can be seen in fig. 6 the phase-cut detector 7 further comprises a low pass filter LPF having a resistor R_{F} and a capacitor C_{F} used to low pass filter the output signal of the comparator COMP. The low pass filter LPF low pass filters the generated dimmer on/off signal being a pulse width modulated signal (PWM) output by the comparator COMP to generate an average voltage as an indication of the dimmer setting of the phase-cut dimmer 3. This average voltage forms a dim-level signal DIMLVL applied to the dimmer detection circuit 6B and to a driver circuit 8 as shown in fig. 1. The dim-level voltage DIMLVL is used to control the driver circuit 8 that generates a current for driving light emitting entities such as light emitting diodes LEDs 9-i as shown in fig. 1 and fig. 9.

The task of the dynamic load control circuit 6 is to generate a low impedance path when the dimmer circuit 3 is nonconducting. The low impedance ensures that the timing of the dimmer 3 is not changed and that the TRIAC activation time is equal as when using a conventional incandescent lamp. After the TRIAC T is activated the dynamic load control circuit 6 generates a current which is larger than the hold current I_{HOLD} of the TRIAC T to keep the TRIAC T on during the remaining voltage phase. As can be seen in fig. 1 the dynamic load control circuit 6 consists of the controller circuit 6A and the dimmer detection circuit 6B.

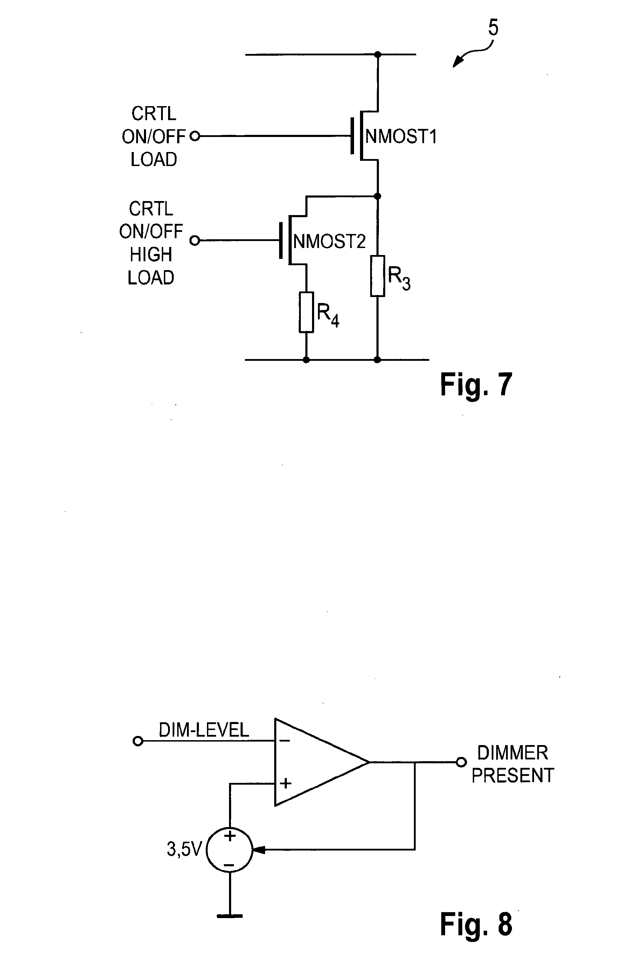

A possible implementation of the dimmer detection circuit 6B is shown in more detail in fig. 8. The dimmer detection circuit 6B evaluates the analogue phase-cut setting, i.e. the dim-level signal DIMLVL output by the phase-cut detector 7 to determine whether a dimmer 3 is present or not. A high phase-cut setting of e.g. > 3,5 V indicates that there is no dimmer 3 present. The output signal of the dimmer detection circuit 6B can be used by the dynamic load control circuit 6 to turn off the load current that normally is used to stabilize the dimmer control. Turning-off the dynamic load current reduces the power dissipation. As can be seen in fig. 8 the dimmer detection circuit 6B can comprise a comparator COMP adapted to compare the dim-level indication signal DIMLVL to a predetermined reference level to generate a dimmer present indication signal applied to the controller 6A of the dynamic load control circuit 6.

As can be seen in fig. 1 the controller 6A of the dynamic load control circuit 6 receives in the shown embodiment three input signals. The controller 6A receives the dimmer on/off signal from the phase-cut detector 7 and a dimmer present signal from the dimmer detection circuit 6B. The dimmer present signal indicates whether the dimmable energy-efficient electronic lamp 1 is connected to a dimmer circuit 3 or not. In the shown embodiment of fig. 1 the controller 6A further receives a current sense input signal I_{SENSE} that indicates a level of the driver circuit current. The controller 6A of the dynamic load control circuit 6 evaluates the input signals to generate control switching signals CRTL applied to the dynamic load circuit 5.

Fig. 7 shows a possible implementation of a dynamic load circuit 5 employed by the dimmable energy-efficient electronic lamp 1. In the shown implementation the dynamic load circuit 5 comprises two transistors NMOST1 and NMOST2 receiving switching control signals CRTL from the controller 6A. Each transistor has a gate receiving a switching control signal CRTL from the controller 6A of the dynamic load control circuit 6 depending on the dimmer present indication signal received by the controller 6A from the dimmer detection circuit 6B, depending on the dimmer on/off signal received by the controller 6A from the phase-cut detector 7 and depending on the current sense input signal I_{SENSE} indicating a level of the driver current of the driver circuit 8.

As can be seen in fig. 7 a first transistor NMOST1 is connected to the output of the rectifier circuit 4 and receives the rectified dimmer signal with a maximum amplitude Aₘₐₓ of about 350 V. The transistor NMOST1 can be formed by an external component interfacing the high voltage of the rectified dimmer signal to a lower internal voltage of an integrated chip, e.g. 12 V. A second internal transistor NMOST2 can be used as a switch to increase a current (on/off high load). Both transistors comprise a corresponding resistive load R₃, R₄ which consume power if the respective transistor is switched on. The first transistor NMOST1 of the dynamic load circuit 5 is connected between the output of the rectifier circuit 4 and a reference potential via a first resistive load R₃ which consumes electrical power if the first transistor NMOST1 is switched on in response to a switching control signal CRTL output by the controller 6A of the dynamic load control circuit 6. As can be seen in fig. 7 the second transistor NMOST2 of the dynamic load circuit 5 is connected between the output of the first transistor NMOST1 and the reference potential via a second resistive load R₄ which consumes electrical power if the first and second transistor are switched on in response to switching control signals CRTL output by the controller 6A of the dynamic load control circuit 6.

The controller 6A generates the switch control signals CRTL for the transistors of the dynamic load circuit 5 as follows. If the dimmer on/off signal received by the controller 6A of the dynamic load control circuit 6 from the phase-cut detector 7 indicates that a dimmer is off, the controller 6A applies switching control signals to switch both transistors NMOST1, NMOST2 of the dynamic load circuit 5 on, thus generating a low impedance load for the dimmer 3.

If the dimmer on/off signal received by the controller 6A of the dynamic load control circuit 6 received from the phase-cut detector 7 indicates that a dimmer 3 is on, the controller 6A applies switching control signals to switch the second transistor NMOST2 of the dynamic load circuit 5 off and to switch the first transistor NMOST1 of the dynamic load circuit 5 on.

If the phase-cut detector 7 indicates that the dimmer 3 is on, the high load control signal applied to the gate of the second transistor NMOST2 is turned off and the remaining resistor R₃ generates a lower current but being large enough to ensure a correct operation of the dimmer circuit 3 having a current strength of for example approximately 20 mA. If during the dimmer on phase the system current is larger than the minimum needed current for stable operation (I_{sys} > 20 mA) the load is completely turned off using the on/off dimmer signal.

If the dimmer on/off signal received by the controller 6A of the dynamic load control circuit 6 received from the phase-cut detector 7 indicates that a dimmer 3 is on and if the current sense input signal I_{SENSE} indicates that the driver current is larger than a minimal needed current for stable operation the controller 6A applies switching control signals CRTL to switch transistor NMOST1 of the dynamic load circuit 5 off, rendering the whole dynamic load circuitry current less.

If the dimmer on/off signal received by the controller 6A of the dynamic load control circuit 6 from the phase-cut detector 7 indicates that a dimmer is on and if the dimmer present indication signal received by the controller 6A from the dimmer detection circuit 6B indicates that no dimmer is present the controller 6A applies switching control signals CRTL to switch transistor NMOST1 of the dynamic load circuit 5 off, rendering the whole dynamic load circuitry current less. If no dimmer 3 is present, no stabilization current for the dimmer 3 is needed.

The driver circuit 8 connected to the phase-cut detector 7 as shown in fig. 1 is illustrated in more detail in connection with fig. 9. In the shown embodiment the driver circuit 8 is formed by an LED driver circuit for driving a predetermined number of light emitting diodes LED, for example ten light emitting diodes 9-1 - 9-10 as shown in fig. 9. The supply voltage of the light emitting diodes LEDs depends on the setting of the dimmer 3 and can vary between e.g. 150 V up to 350 V. The rectified power supply signal output by the rectifier circuit 4 as shown in fig. 5B is smoothed by means of a diode D and buffer capacitor C as shown in fig. 1. In the shown implementation of fig. 9 the driver circuit 8 is provided for driving a total of ten light emitting diodes 9-1 to 9-10. As a typical power LED forward voltage is about 3 V using a total of ten LEDs leads in this implementation to a voltage of about 30 V, i.e. approximately 6 - 12 times smaller than the rectified buffered supply voltage. To overcome the large voltage variation and to have an efficient way to generate a constant current through the string of light emitting diodes 9-1 to 9-10 the driver circuit 8 comprises in the shown implementation of fig. 9 a buck converter. The phase-cut detector 7 generates an input reference signal to the driver circuit 8 output by the dim-level signal DIMLVL. The driver circuit 8 comprises in the shown implementation a reshaping circuit which adapts the dimming curve to the human eye sensitivity. The current flowing through the light emitting diodes 9-i is sensed and compared to an input reshaped reference signal. An error between the sensed light emitting current and the reshaped reference signal can be used to control the buck converter of the driver circuit 8.

The dimmable energy-efficient electronic lamp 1 as shown in fig. 1 comprises a dimmer detection circuit 6B to determine if the dimmer 3 is present or not. If a dimmer 3 is not present the adaptive load control, i.e. the dynamic load circuit 5 is at least partially disabled. The dimmer detection function can be implemented in a possible implementation as shown in fig. 1 using the information provided by the phase-cut detector 7, i.e. the dim-level signal DIMLVL used to set the LED output current. The adaptive load control is deactivated when the phase-cut is small (maximum output LED current).

The dimmer detection function provided by the dimmer detection circuit 6B increases the efficiency at maximum output LED current or when there is no dimmer present.

Fig. 10 shows a simple flow chart of a possible implementation of a method to save power consumed by a dimmable energy-efficient electronic lamp connected to a mains power supply 2. In a first step S1 it is detected whether a phase-cut dimmer 3 is present in the mains power supply 2.

In a further step S2 the dynamic load circuit 5 of the energy-efficient electronic lamp 1 is at least partially deactivated if no phase-cut dimmer is present in the mains power supply 2.

The mains power supply signal supplied to the energy-efficient electronic lamp 1 by the mains power supply 2 is processed to generate a dimmer on/off signal by the phase-cut detector 7 having a duty cycle which depends on whether the phase-cut dimmer 3 is present in the mains power supply 2 or not. This dimmer on/off signal can be low pass filtered to generate a dim-level indication signal DIMLVL wherein the dim-level indication signal DIMLVL is compared with a predetermined reference level to generate a dimmer present indication signal. The generated dimmer on/off signal and the dim-level indication signal DIMLVL can be evaluated for example by the controller 6A of the dynamic load control circuit 6 to control the dynamic load circuit 5, wherein the dynamic load circuit 5 is at least partially activated, if no phase-cut dimmer 3 is present in the mains power supply 2.

## Claims

1. A dimmable energy-efficient electronic lamp (1) connectable to a mains power supply (2), said lamp (1) comprising:
- a dynamic load circuit (5) adapted to stabilize a phase-cut dimmer (3),
- a rectifier circuit (4) adapted to rectify a mains power supply signal supplied to the dimmable energy-efficient electronic lamp (1) by the mains power supply (2),
- a phase-cut detector (7) having
a voltage divider circuit adapted to divide said rectified mains power supply signal provided by said rectifier circuit (4) with a predetermined division ratio,
a comparator adapted to compare the divided rectified mains power supply signal with a predetermined reference voltage to generate a dimmer on/off signal comprising a duty cycle which depends on whether a phase-cut dimmer (3) is in a conduction stage or not, and
a low pass filter (LPF) adapted to filter the dimmer on/off signal to generate a dim-level indication signal (DIMLVL) indicating the ratio between on-/off stage of the phase-out dimmer (3), and said lamp **characterised by** comprising:
- a dynamic load control circuit (6) adapted to deactivate said dynamic load circuit (5) which uses the dim-level indication signal (DIMLVL) to detect that no phase-cut dimmer (3) is present in said mains power supply (2)
- a driver circuit (8) adapted to receive the dim-level indication signal (DIM LVL) to stabilize an electrical current flowing through at least one light emitting entity (9) comprising at least one light emitting diode (LED) or at least one OLED or at least one CFL or at least one laser,
wherein the driver circuit (8) comprises:
a buck converter; and
a reshaping circuit which adapts a dimming curve to the human eye sensitivity, the reshaping circuit being adapted to sense the electrical current flowing through the light emitting entity (9), to compare the sensed current to an input reshaped reference signal, and to control the buck converter by an error between the sensed current and
the reshaped reference signal.

2. The dimmable energy-efficient electronic lamp (1) according to claim 1,
wherein said dynamic load control circuit (6) comprises a dimmer detection circuit (6B) having a comparator adapted to compare the dim-level indication signal (DIMLVL) with a predetermined reference level to generate a dimmer present signal applied to a controller (6A) of said dynamic load control circuit (6).

3. The dimmable energy-efficient electronic lamp (1) according to claim 2,
wherein if the dim-level indication signal (DIMLVL) has a high amplitude being higher than the reference level indicating that no phase-cut dimmer is present in the mains power supply (2), the comparator of said dimmer detection circuit (6B) sets the dimmer present indication signal to low and
if the dim-level indication signal (DIMLVL) has a low amplitude being lower than the reference level indicating that a phase-cut dimmer is present in the mains power supply (2), the comparator of said dimmer detection circuit (6B) sets the dimmer present indication signal to high.

4. The dimmable energy-efficient electronic lamp (1) according to one of the preceding clams 1 3,
wherein the dynamic load circuit (5) comprises at least one transistor having a gate receiving switching control signals (CTRL) from the controller (6A) of said dynamic load control circuit (6) depending on the dimmer present indication signal received by the controller (6A) from the dimmer detection circuit (6B), depending on the dimmer on/off signal received by the controller (6A) from the phase-cut detector (7) and depending on a current sense input signal (I_{SENSE}) indicating a level of a driver current.

5. The dimmable energy-efficient electronic lamp (1) according to claim 4,
wherein a first transistor (NMOST1) of said dynamic load circuit (5) is connected between the output of said rectifier circuit (4) and a reference potential via a first resistive load (R3) which consumes electrical power if the first transistor (NMOST1) is switched on in response to switching control signals (CRTL) output by the controller (6A) of said dynamic load control circuit (6).

6. The dimmable energy-efficient electronic lamp (1) according to claim 5,
wherein a second transistor (NMOST2) of said dynamic load circuit (5) is connected between the output of the first transistor (NMOST1) and said reference potential via a second resistive load (R4) which consumes electrical power if the first and second transistor are switched on in response to the switching control signals (CRTL) output by said controller (6A) of said dynamic load control circuit (6).

7. The dimmable energy-efficient electronic lamp (1) according to claim 6,
wherein if the dimmer on/off signal received by the controller (6A) of said dynamic load control circuit from said phase-cut detector (7) indicates that a dimmer (3) is off, the controller (6A) applies the switching control signals to switch both transistors (INMOST1, NMOST2) of said dynamic load circuit (5) on.

8. The dimmable energy-efficient electronic lamp (1) according to claim 6 or 7,
wherein if the dimmer on/off signal received by the controller (6A) of said dynamic load control circuit from said phase-cut detector (7) indicates that a dimmer (3) is on the controller (6A) applies the switching control signals to switch the second transistor (NMOST2) of said dynamic load circuit (5) off and to switch the first transistor (NMOST1) of said dynamic load circuit (5) on.

9. The dimmable energy-efficient electronic lamp (1) according to one of the preceding claims 7 or 8,
wherein if the dimmer on/off signal received by the controller (6A) of said dynamic load control circuit (6) received from the phase-cut detector (7) indicates that a dimmer (3) is on and if the current sense input signal (I_{SENSE}) indicates that the driver current is larger than a minimal needed current for stable operation the controller (6A) applies switching control signals (CRTL) to switch the transistor INMOST1 of the dynamic load circuit (5) off, so as to reduce the dynamic load circuitry current.

10. The dimmable energy-efficient electronic lamp (1) according to one of the preceding claim 7-9,
wherein if the dimmer on/off signal received by the controller (6A) of said dynamic load control circuit (6) received from said phase-cut detector (7) indicates that a dimmer (3) is on and if the dimmer present indication signal received by the controller (6A) from said dimmer detection circuit (6B) indicates that no dimmer (3) is present the controller (6A) applies switching control signals (CRTL) to switch the transistor (NMOST1) of the dynamic load circuit (5) off, so as to reduce the dynamic load circuitry current.

11. The dimmable energy-efficient electronic lamp (1) according to claim 1,
wherein said dim-level indication signal (DIMLVL) output by the low pass filter (LPF) of said phase-cut detector (7) is applied to a signal reshaper of a driver circuit (8) to generate a reference voltage for the buck converter of said driver circuit (8).

12. A method for saving power consumed by a dimmable energy-efficient electronic lamp (1) connected to a mains power supply (2) comprising:
- rectifying a mains power supply signal supplied to the dimmable energy-efficient electronic lamp (1) by the mains power supply (2),
- dividing, by a voltage divider circuit, said rectified mains power supply signal with a predetermined division ratio,
- comparing the divided rectified mains power supply signal with a predetermined reference voltage to generate a dimmer on/off signal comprising a duty cycle which depends on whether a phase-cut dimmer (3) is in a conduction stage or not,
- low pass filtering the dimmer on/off signal to generate a dim-level indication signal (D1MLVL) indicating the ratio between on-/off stage of the phase-out dimmer (3),
- detecting (S1) whether a phase-cut dimmer (3) is present in said mains power supply (2) by using said dim-level indication signal, deactivating (S2) at least partially a dynamic load circuit (5) of said energy-efficient electronic lamp (1) if no phase-cut dimmer (3) is present in said mains power supply (2)
- receiving the dim-level indication signal (DIMLVL) to stabilize an electrical current flowing through at least one light emitting entity (9) comprising at least one light emitting diode (LED) or at least one OLED or at least one CFL or at least one laser,
- adapting a dimming curve to the human eye sensitivity,
- sensing an electrical current flowing through the light emitting entity (9),
- comparing the sensed current flowing through the light emitting entity (9) to an input reshaped reference signal, and
- controlling an error between the sensed current and the reshaped reference signal.

13. The method according to claim 12 further comprising:
comparing the generated dim-level indication signal (DIMLVL) with a predetermined reference level to generate a dimmer present indication signal,
wherein said dimmer on/off signal and said dim-level indication signal (DIMLVL) are evaluated by a controller (6A) of a dynamic load control circuit (6) to control said dynamic load circuit (5).

## Patentansprüche

1. Dimmbare energieeffiziente elektronische Lampe (1), die mit einer Netzstromversorgung (2) verbunden werden kann, wobei die Lampe (1) Folgendes umfasst:
- einen dynamischen Lastkreis (5), der dafür eingerichtet ist, einen Phasenabschnittdimmer (3) zu stabilisieren,
- einen Gleichrichterkreis (4), der dafür eingerichtet ist, ein Netzstromversorgungs-Signal gleichzurichten, das der dimmbaren energieeffizienten elektronische Lampe (1) durch die Netzstromversorgung (2) zugeführt wird,
- einen Phasenabschnittdetektor (7), der Folgendes aufweist:
• einen Spannungsteilerkreis, der dafür eingerichtet ist, das durch den Gleichrichterkreis (4) bereitgestellte gleichgerichtete Netzstromversorgungs-Signal mit einem zuvor festgelegten Teilungsverhältnis zu teilen,
• einen Komparator, der dafür eingerichtet ist, das geteilte gleichgerichtete Netzstromversorgungs-Signal mit einer zuvor festgelegten Bezugsspannung zu vergleichen, um ein Dimmer-Ein/Aus-Signal zu erzeugen, das ein Tastverhältnis umfasst, das davon abhängig ist, ob sich ein Phasenabschnittdimmer (3) in einem leitenden Zustand befindet oder nicht, und
• ein Tiefpassfilter (TPF), das dafür eingerichtet ist, das Dimmer-Ein/Aus-Signal zu filtern, um ein Dimmpegelanzeigesignal (DIMLVL) zu erzeugen, das das Verhältnis zwischen der Ein/Aus-Stufe des Phasenabschnittdimmers (3) anzeigt,
und die Lampe **dadurch gekennzeichnet ist, dass** sie Folgendes umfasst:
- einen dynamischen Laststeuerkreis (6), der dafür eingerichtet ist, den dynamischen Lastkreis (5) zu deaktivieren, und der das Dimmpegelanzeigesignal (DIMLVL) verwendet, um zu detektieren, dass kein Phasenabschnittdimmer (3) in der Netzstromversorgung (2) vorhanden ist,
- einen Treiberkreis (8), der dafür eingerichtet ist, das Dimmpegelanzeigesignal (DIMLVL) zu empfangen, um einen elektrischen Strom zu stabilisieren, der durch mindestens eine Lichtaussendeeinheit (9) fließt, die mindestens eine Leuchtdiode (LED) oder mindestens eine OLED oder mindestens eine CFL oder mindestens einen Laser umfasst,
wobei der Treiberkreis (8) Folgendes umfasst:
• einen Abwärtswandler; und
• einen Umformerkreis, der eine Dimmkurve an die Empfindlichkeit des menschlichen Auges angepasst, wobei der Umformerkreis dafür eingerichtet ist, den elektrischen Strom abzutasten, der durch die Lichtaussendeeinheit (9) fließt, den abgetasten Strom mit einem eingegebenen umgeformten Bezugssignal zu vergleichen und den Abwärtswandler durch einen Fehler zwischen dem abgetastten Strom und dem umgeformten Bezugssignal zu steuern.

2. Dimmbare energieeffiziente elektronische Lampe (1) nach Anspruch 1,
wobei der dynamische Laststeuerkreis (6) einen Dimmerdetektionskreis (6B) umfasst, der einen Komparator aufweist, der dafür eingerichtet ist, das Dimmpegelanzeigesignal (DIMLVL) mit einem zuvor festgelegten Bezugspegel zu vergleichen, um ein Dimmervorhanden-Signal zu erzeugen, das an eine Steuereinheit (6A) des dynamischen Laststeuerkreises (6) angelegt wird.

3. Dimmbare energieeffiziente elektronische Lampe (1) nach Anspruch 2,
wobei, wenn das Dimmpegelanzeigesignal (DIMLVL) eine hohe Amplitude hat, die höher als der Bezugspegel ist, was anzeigt, dass kein Phasenabschnittdimmer in der Netzstromversorgung (2) vorhanden ist, der Komparator des Dimmerdetektionskreises (6B) das Dimmer-vorhanden-Anzeigesignal auf "low" setzt, und
falls das Dimmpegelanzeigesignal (DIMLVL) eine niedrige Amplitude hat, die niedriger als der Bezugspegel ist, was anzeigt, dass ein Phasenabschnittdimmer in der Netzstromversorgung (2) vorhanden ist, der Komparator des Dimmerdetektionskreises (6B) das Dimmer-vorhanden-Anzeigesignal auf "high" setzt.

4. Dimmbare energieeffiziente elektronische Lampe (1) nach einem der vorangehenden Ansprüche 1-3,
wobei der dynamische Lastkreis (5) mindestens einen Transistor umfasst, der eine Gate-Elektrode hat, die Schaltsteuersignale (CTRL) von der Steuereinheit (6A) des dynamischen Laststeuerkreises (6) in Abhängigkeit von dem Dimmer-vorhanden-Anzeigesignal, das die Steuereinheit (6A) von dem Dimmerdetektionskreis (6B) empfängt, in Abhängigkeit von dem Dimmer-Ein/Aus-Signal, das die Steuereinheit (6A) von dem Phasenabschnittdetektor (7) empfängt, und in Abhängigkeit von einem Stromabtasteingangssignal (I_{SENSE}), das einen Pegel eines Ansteuerstroms anzeigt, empfängt.

5. Dimmbare energieeffiziente elektronische Lampe (1) nach Anspruch 4,
wobei ein erster Transistor (NMOST₁) des dynamischen Lastkreises (5) zwischen dem Ausgang des Gleichrichterkreises (4) und einem Bezugspotenzial über eine erste ohmsche Last (R₃) verbunden ist, die elektrische Leistung verbraucht, wenn der erste Transistor (NMOST₁) in Reaktion auf Schaltsteuersignale (CRTL) eingeschaltet wird, die durch die Steuereinheit (6A) des dynamischen Laststeuerkreises (6) ausgegeben werden.

6. Dimmbare energieeffiziente elektronische Lampe (1) nach Anspruch 5,
wobei ein zweiter Transistor (NMOST₂) des dynamischen Lastkreises (5) zwischen dem Ausgang des ersten Transistors (NMOST₁) und dem Bezugspotenzial über eine zweite ohmsche Last (R₄) verbunden ist, die elektrische Leistung verbraucht, wenn der erste und der zweite Transistor in Reaktion auf die Schaltsteuersignale (CRTL) eingeschaltet wird, die durch die Steuereinheit (6A) des dynamischen Laststeuerkreises (6) ausgegeben werden.

7. Dimmbare energieeffiziente elektronische Lampe (1) nach Anspruch 6,
wobei, wenn das Dimmer-Ein/Aus-Signal, das durch die Steuereinheit (6A) des dynamischen Laststeuerkreises von dem Phasenabschnittdetektor (7) empfangen wird, anzeigt, dass ein Dimmer (3) aus ist, die Steuereinheit (6A) die Schaltsteuersignale anlegt, um beide Transistoren (NMOST₁, NMOST₂) des dynamischen Lastkreises (5) einzuschalten.

8. Dimmbare energieeffiziente elektronische Lampe (1) nach Anspruch 6 oder 7,
wobei, wenn das Dimmer-Ein/Aus-Signal, das durch die Steuereinheit (6A) des dynamischen Laststeuerkreises von dem Phasenabschnittdetektor (7) empfangen wird, anzeigt, dass ein Dimmer (3) ein ist, die Steuereinheit (6A) die Schaltsteuersignale anlegt, um den zweiten Transistor
(NMOST₂) des dynamischen Lastkreises (5) auszuschalten und den ersten Transistor (NMOST₁) des dynamischen Lastkreises (5) einzuschalten.

9. Dimmbare energieeffiziente elektronische Lampe (1) nach einem der vorangehenden Ansprüche 7 oder 8,
wobei, wenn das Dimmer-Ein/Aus-Signal, das durch die Steuereinheit (6A) des dynamischen Laststeuerkreises (6) von dem Phasenabschnittdetektor (7) empfangen wird, anzeigt, dass ein Dimmer (3) ein ist, und wenn das Stromabtasteingangssignal (I_{SENSE}) anzeigt, dass der Ansteuerstrom größer ist als ein für einen stabilen Betrieb benötigter Mindeststrom, die Steuereinheit (6A) Schaltsteuersignale (CRTL) anlegt, um den Transistor (NMOST₁) des dynamischen Lastkreises (5) auszuschalten, um den Strom der dynamischen Lastschaltungen zu reduzieren.

10. Dimmbare energieeffiziente elektronische Lampe (1) nach einem der vorangehenden Ansprüche 7-9,
wobei, wenn das Dimmer-Ein/Aus-Signal, das durch die Steuereinheit (6A) des dynamischen Laststeuerkreises (6) von dem Phasenabschnittdetektor (7) empfangen wird, anzeigt, dass ein Dimmer (3) ein ist, und wenn das Dimmer-vorhanden-Anzeigesignal, das durch die Steuereinheit (6A) von dem Dimmerdetektionskreis (6B) empfangen wird, anzeigt, dass kein Dimmer (3) vorhanden ist, die Steuereinheit (6A) Schaltsteuersignale (CRTL) anlegt, um den Transistor (NMOST₁) des dynamischen Lastkreises (5) auszuschalten, um den Strom der dynamischen Lastschaltungen zu reduzieren.

11. Dimmbare energieeffiziente elektronische Lampe (1) nach Anspruch 1,
wobei das Dimmpegelanzeigesignal (DIMLVL), das durch das Tiefpassfilter (TPF) des Phasenabschnittdetektors (7) ausgegeben wird, in einen Signalumformer eines Treiberkreises (8) eingespeist wird, um eine Bezugsspannung für den Abwärtswandler des Treiberkreises (8) zu erzeugen.

12. Verfahren zum Sparen von Strom, der durch eine dimmbare energieeffiziente elektronische Lampe (1) verbraucht wird, die mit einer Netzstromversorgung (2) verbunden ist, das Folgendes umfasst:
- Gleichrichten eines Netzstromversorgungs-Signals, das der dimmbaren energieeffizienten elektronischen Lampe (1) durch die Netzstromversorgung (2) zugeführt wird,
- Teilen, durch einen Spannungsteilerkreis, des gleichgerichteten Netzstromversorgungs-Signals mit einem zuvor festgelegten Teilungsverhältnis,
- Vergleichen des geteilten gleichgerichteten Netzstromversorgungs-Signals mit einer zuvor festgelegten Bezugsspannung, um ein Dimmer-Ein/Aus-Signal zu erzeugen, das ein Tastverhältnis umfasst, das davon abhängt, ob ein Phasenabschnittdimmer (3) sich in einem leitenden Zustand befindet oder nicht,
- Tiefpassfiltern des Dimmer-Ein/Aus-Signals, um ein Dimmpegelanzeigesignal (DIMLVL) zu erzeugen, welches das Verhältnis zwischen einer Ein/Aus-Stufe des Phasenabschnittdimmers (3) anzeigt,
- Detektieren (S1) anhand des Dimmpegelanzeigesignals, ob ein Phasenabschnittdimmer (3) in der Netzstromversorgung (2) vorhanden ist;
- mindestens teilweises Deaktivieren (S2) eines dynamischen Lastkreises (5) der energieeffizienten elektronischen Lampe (1), wenn kein Phasenabschnittdimmer (3) in der Netzstromversorgung (2) vorhanden ist,
- Empfangen des Dimmpegelanzeigesignals (DIMLVL), um einen elektrischen Strom zu stabilisieren, der durch mindestens eine Lichtaussendeeinheit (9) fließt, die mindestens eine Leuchtdiode (LED) oder mindestens eine OLED oder mindestens eine CFL oder mindestens einen Laser umfasst,
- Anpassen einer Dimmkurve an die Empfindlichkeit des menschlichen Auges,
- Abtasten eines elektrisches Stroms, der durch die Lichtaussendeeinheit (9) fließt,
- Vergleichen des abgetasteten Stroms, der durch die Lichtaussendeeinheit (9) fließt, mit einem eingegebenen umgeformten Bezugssignal und
- Steuern eines Fehlers zwischen dem abgetasteten Strom und dem umgeformten Bezugssignal.

13. Verfahren nach Anspruch 12, das des Weiteren Folgendes umfasst:
- Vergleichen des erzeugten Dimmpegelanzeigesignals (DIMLVL) mit einem zuvor festgelegten Bezugspegel, um ein Dimmer-vorhanden-Anzeigesignal zu erzeugen,
wobei das Dimmer-Ein/Aus-Signal und das Dimmpegelanzeigesignal (DIMLVL) durch eine Steuereinheit (6A) eines dynamischen Laststeuerkreises (6) ausgewertet werden, um den dynamischen Lastkreis (5) zu steuern.

## Revendications

1. Lampe électronique éconergétique à intensité variable (1) pouvant être reliée à une alimentation secteur (2), ladite lampe (1) comprenant :
- un circuit de charge dynamique (5) conçu pour stabiliser un gradateur à coupure de phase (3),
- un circuit redresseur (4) conçu pour redresser un signal d'alimentation secteur fourni à la lampe électronique éconergétique à intensité variable (1) par l'alimentation secteur (2),
- un détecteur de coupure de phase (7) ayant :
• un circuit diviseur de tension conçu pour diviser ledit signal d'alimentation secteur redressé fourni par ledit circuit redresseur (4) avec un rapport de division prédéterminé,
• un comparateur conçu pour comparer le signal d'alimentation secteur redressé divisé à une tension de référence prédéterminée pour générer un signal marche/arrêt de gradateur comprenant un cycle de service qui dépend du fait de savoir si un gradateur à coupure de phase (3) est dans une phase de conduction ou non, et
• un filtre passe-bas (LPF) conçu pour filtrer le signal marche/arrêt de gradateur pour générer un signal d'indication de niveau de gradation (DIMLVL) indiquant le rapport entre la phase marche/arrêt du gradateur à coupure de phase (3),
et ladite lampe étant **caractérisée en ce qu'**elle comprend :
- un circuit de commande de charge dynamique (6) conçu pour désactiver ledit circuit de charge dynamique (5) qui utilise le signal d'indication de niveau de gradation (DIMLVL) pour détecter qu'aucun gradateur à coupure de phase (3) n'est présent dans ladite alimentation secteur (2),
- un circuit d'attaque (8) conçu pour recevoir le signal d'indication de niveau de gradation (DIMLVL) pour stabiliser un courant électrique circulant à travers au moins une entité émettrice de lumière (9) comprenant au moins une diode électroluminescente (LED) ou au moins une OLED ou au moins une CFL ou au moins un laser,
dans laquelle le circuit d'attaque (8) comprend :
• un convertisseur abaisseur de tension ; et
• un circuit de remise en forme qui adapte une courbe de gradation à la sensibilité de l'oeil humain, 1 le circuit de remise en forme étant conçu pour détecter le courant électrique qui circule à travers l'entité émettrice de lumière (9), pour comparer le courant détecté à un signal de référence d'entrée remis en forme, et pour commander le convertisseur abaisseur de tension par une erreur entre le courant détecté et le signal de référence remis en forme.

2. Lampe électronique éconergétique à intensité variable (1) selon la revendication 1,
dans laquelle ledit circuit de commande de charge dynamique (6) comprend un circuit de détection de gradateur (6B) comportant un comparateur conçu pour comparer le signal d'indication de niveau de gradation (DIMLVL) à un niveau de référence prédéterminé pour générer un signal de présence de gradateur appliqué à un contrôleur (6A) dudit circuit de commande de charge dynamique (6).

3. Lampe électronique éconergétique à intensité variable (1) selon la revendication 2,
dans laquelle, si le signal d'indication de niveau de gradation (DIMLVL) a une amplitude élevée qui est supérieure au niveau de référence indiquant qu'aucun gradateur à coupure de phase n'est présent dans l'alimentation secteur (2), le comparateur dudit circuit de détection de gradateur (6B) met le signal d'indication de présence de gradateur à l'état bas, et
si le signal d'indication de niveau de gradateur (DIMLVL) a une faible amplitude qui est inférieure au niveau de référence indiquant qu'un gradateur à coupure de phase est présent dans l'alimentation secteur (2), le comparateur dudit circuit de détection de gradateur (6B) met le signal d'indication de présence de gradateur à l'état haut.

4. Lampe électronique éconergétique à intensité variable (1) selon l'une quelconque des revendications 1 à 3,
dans laquelle le circuit de charge dynamique (5) comprend au moins un transistor ayant une grille recevant des signaux de commande de commutation (CTRL) à partir du contrôleur (6A) dudit circuit de commande de charge dynamique (6) en fonction du signal d'indication de présence de gradateur reçu par le contrôleur (6A) à partir du circuit de détection de gradateur (6B), en fonction du signal marche/arrête de gradateur reçu par le contrôleur (6A) à partir du détecteur de coupure de phase (7) et en fonction d'un signal d'entrée de détection de courant (I_{SENSE}) indiquant un niveau d'un courant d'attaque.

5. Lampe électronique éconergétique à intensité variable (1) selon la revendication 4,
dans laquelle un premier transistor (NMOST₁) dudit circuit de charge dynamique (5) est connecté entre la sortie dudit circuit redresseur (4) et un potentiel de référence par l'intermédiaire d'une première charge résistive (R₃) qui consomme de l'énergie électrique si le premier transistor (NMOST₁) est activé en réponse à des signaux de commande de commutation (CRTL) délivrés par le contrôleur (6A) dudit circuit de commande de charge dynamique (6).

6. Lampe électronique éconergétique à intensité variable (1) selon la revendication 5,
dans laquelle un second transistor (NMOST₂) dudit circuit de charge dynamique (5) est connecté entre la sortie du premier transistor (NMOST₁) et ledit potentiel de référence par l'intermédiaire d'une seconde charge résistive (R₄) qui consomme de l'énergie électrique si le premier et le second transistor sont activés en réponse aux signaux de commande de commutation (CTRL) délivrés par ledit contrôleur (6A) dudit circuit de commande de charge dynamique (6).

7. Lampe électronique éconergétique à intensité variable (1) selon la revendication 6,
dans laquelle, si le signal marche/arrêt de gradateur reçu par le contrôleur (6A) dudit circuit de commande de charge dynamique à partir dudit détecteur de coupure de phase (7) indique qu'un gradateur (3) est désactivé, le contrôleur (6A) applique les signaux de commande de commutation pour activer les deux transistors (NMOST₁, NMOST₂) dudit circuit de charge dynamique (5).

8. Lampe électronique éconergétique à intensité variable (1) selon la revendication 6 ou 7,
dans laquelle, si le signal marche/arrêt de gradateur reçu par le contrôleur (6A) dudit circuit de commande de charge dynamique à partir dudit détecteur de coupure de phase (7) indique qu'un gradateur (3) est activé, le contrôleur (6A) applique les signaux de commande de commutation pour désactiver le second transistor (NMOST₂) dudit circuit de charge dynamique (5) et pour activer le premier transistor (NMOST₁) dudit circuit de charge dynamique (5).

9. Lampe électronique éconergétique à intensité variable (1) selon l'une quelconque des revendications précédentes 7 ou 8,
dans laquelle, si le signal marche/arrêt de gradateur reçu par le contrôleur (6A) dudit circuit de commande de charge dynamique (6) reçu à partir du détecteur de coupure de phase (7) indique qu'un gradateur (3) est activé, et si le signal d'entrée de détection de courant (I_{SENSE}) indique que le courant d'attaque est supérieur à un courant minimum nécessaire pour un fonctionnement stable, le contrôleur (6A) applique des signaux de commande de commutation (CRTL) pour désactiver le transistor (NMOST₁) du circuit de charge dynamique (5), de manière à réduire le courant du circuit de charge dynamique.

10. Lampe électronique éconergétique à intensité variable (1) selon l'une quelconque des revendications précédentes 7 à 9,
dans laquelle, si le signal marche/arrêt de gradateur reçu par le contrôleur (6A) dudit circuit de commande de charge dynamique (6) reçu à partir dudit détecteur de coupure de phase (7) indique que le gradateur (3) est activé, et si le signal d'indication de présence de gradateur reçu par le contrôleur (6A) à partir dudit circuit de détection de gradateur (6B) indique qu'aucun gradateur (3) n'est présent, le contrôleur (6A) applique des signaux de commande de commutation (CTRL) pour désactiver le transistor (NMOST₁) du circuit de charge dynamique (5), de manière à réduire le courant du circuit de charge dynamique.

11. Lampe électronique éconergétique à intensité variable (1) selon la revendication 1,
dans laquelle ledit signal d'indication de niveau de gradation (DIMLVL) délivré par le filtre passe-bas (LPF) dudit détecteur de coupure de phase (7) est appliqué à un dispositif de remise en forme de signal d'un circuit d'attaque (8) pour générer une tension de référence pour le convertisseur abaisseur de tension dudit circuit d'attaque (8).

12. Procédé pour économiser l'énergie consommée par une lampe électronique éconergétique à intensité variable (1) reliée à une alimentation secteur (2), comprenant :
- redresser un signal d'alimentation secteur fourni à la lampe électronique éconergétique à intensité variable (1) par l'alimentation secteur (2),
- diviser, par un circuit diviseur de tension, ledit signal d'alimentation secteur redressé avec un rapport de division prédéterminé,
- comparer le signal d'alimentation secteur redressé divisé à une tension de référence prédéterminée pour générer un signal marche/arrêt de gradateur comprenant un cycle de service qui dépend du fait de savoir si un gradateur à coupure de phase (3) est dans une phase de conduction ou non, et
- filtrer passe-bas le signal marche/arrêt de gradateur pour générer un signal d'indication de niveau de gradation (DIMLVL) indiquant le rapport entre la phase marche/arrêt du gradateur à coupure de phase (3),
- détecter (S1) si un gradateur à coupure de phase (3) est présent dans ladite alimentation secteur (2) en utilisant ledit signal d'indication de niveau de gradation,
- désactiver (S2) au moins en partie un circuit de charge dynamique (5) de ladite lampe électronique éconergétique (1) si aucun gradateur à coupure de phase (3) n'est présent dans ladite alimentation secteur (2),
- recevoir le signal d'indication de niveau de gradation (DIMLVL) pour stabiliser un courant électrique circulant à travers au moins une entité émettrice de lumière (9) comprenant au moins une diode électroluminescente (LED) ou au moins une OLED ou au moins une CFL ou au moins un laser,
- adapter une courbe de gradation à la sensibilité de l'oeil humain,
- détecter un courant électrique circulant à travers l'entité émettrice de lumière (9),
- comparer le courant détecté circulant à travers l'entité émettrice de lumière (9) à un signal de référence d'entrée remis en forme, et
- commander une erreur entre le courant détecté et le signal de référence remis en forme.

13. Procédé selon la revendication 12, comprenant en outre :
- comparer le signal d'indication de niveau de gradation (DIMLVL) généré à un niveau de référence prédéterminé pour générer un signal d'indication de présence de gradateur,
dans lequel ledit signal marche/arrêt de gradateur et ledit signal d'indication de niveau de gradation (DIMLVL) sont évalués par un contrôleur (6A) d'un circuit de commande de charge dynamique (6) pour commander ledit circuit de charge dynamique (5).
